# EUROPÄISCHE PATENTSCHRIFT

(11) **EP 0 769 324 B1**
(45) Veröffentlichungstag und Bekanntmachung des Hinweises auf die Patenterteilung: **03.01.2001**
(21) Anmeldenummer: 96116820.0
(22) Anmeldetag: 18.10.1996
(51) Int. Cl.: B02C 4/12, B30B 3/02, B30B 9/32

(54) **Vorrichtung zum Komprimieren von Behältnissen**
Apparatus for consolidating containers
Dispositif pour écraser des récipients

(30) Priorität: 19.10.1995 DE 29516552 U
(43) Veröffentlichungstag der Anmeldung: 23.04.1997
(73) Patentinhaber: Hein, Axel, 59425 Unna-Königsborn (DE); Hein, Michael, 59425 Unna-Königsborn (DE)
(72) Erfinder: Hein, Axel, 59425 Unna-Königsborn (DE); Hein, Michael, 59425 Unna-Königsborn (DE)
(74) Vertreter: Betten & Resch

(56) Entgegenhaltungen:
- WO-A-94/19106
- DE-C- 521 714
- DE-C- 601 290
- GB-A- 1 468 662
- US-A- 2 675 970
- US-A- 4 432 279
- US-A- 4 573 405
- US-A- 5 195 429

## Beschreibung

Die Erfindung betrifft eine Vorrichtung zum Komprimieren von insbesondere auch gefüllten Behältnissen wie insbesondere PET-Flaschen und Blechdosen.

Bei Abfüllbetrieben für beispielsweise Limonaden, Säfte, Mineralswasser oder Bier fallen regelmäßig nicht mehr verwendungsfähige Behältnisse wie Flaschen, Dosen oder Kartons (jeweils leer oder befüllt) an, die anschließend hinsichtlich ihres Volumens reduziert werden müssen, um dann in geeigneter Weise entsorgt bzw. recycelt zu werden. In diesem Zusammenhang ist eine Dosenpresse bekannt, bei der die Blechdosen zwischen zwei gegensinnig umlaufenden Scharnierbandketten komprimiert werden und anschließend aus dem Gerät ausgeworfen werden. Eine solche Vorrichtung ist jedoch konstruktiv vergleichsweise aufwendig und voluminös. Eine Quetschvorrichtung entsprechend dem Oberbegriff von Anspruch 1 ist bekannt aus WO-A-9 419 106.

Der Erfindung liegt daher die Aufgabe zugrunde, eine gattungsgemäße Vorrichtung zu schaffen, die sich durch einen besonders einfachen Aufbau und kompakte Ausmaße auszeichnet.

Zur Lösung dieser Aufgabe ist erfindungsgemäß im wesentlichen ein in einem Gerätegehäuse drehbar und motorisch antreibbar gelagertes Rad (bzw. eine Walze) vorgesehen, ein einem Teilumfang des Rads gegenüberliegendes, gekrümmtes Blech, dessen Krümmungsradius in Umlaufrichtung des Rades von einem Anfangsabschnitt zu einem Endabschnitt abnimmt, wobei der Krümmungsradius im Anfangsabschnitt größer ist als der Krümmungsradius des Rades und der Krümmungsradius im Endabschnitt annähernd gleich wird dem Krümmungsradius des Rades derart, daß zwischen Rad und Blech ein sich in Umlaufrichtung des Rades keilförmig verengender Raum gebildet wird, wobei das Rad an seiner Umfangsfläche mit Mitnahmemitteln zum Einziehen der zu komprimierenden Behältnisse in den sich keilförmig verengenden Raum und zum Transport der Behältnisse durch den sich keilförmig verengenden Raum versehen ist.

Die wesentlichen Bestandteile der erfindungsgemäßen Vorrichtung sind somit das sich drehende Rad (bzw. die Walze) sowie das dem Rad gegenüberliegende, feststehende Blech mit in Drehrichtung abnehmendem Krümmungsradius, wobei eine solche Anordnung konstruktiv wesentlich einfacher ist als im Falle des oben genannten Standes der Technik und darüber hinaus auch kompakter und einfacher zu warten und selbstverständlich auch wesentlich kostengünstiger herzustellen.

Die an der Umfangsfläche des Rades vorgesehenen Mitnahmemittel können einerseits durch eine an der Umfangfläche des Rades ausgebildete Struktur wie Profile oder nach außen ragende Mitnehmerelemente wie Stifte, Dornen, Leisten o.dgl. gebildet sein und/oder durch die Wahl eines entsprechenden Materials der Umfangsfldche mit hoher Friktion wie beispielsweise Gummi oder gummiähnliches Material.

In besonders bevorzugter Weiterbildung der Erfindung ist vorgesehen, daß das Rad eine Felge und einen hierauf montierten, aufblasbaren Reifen umfaßt, also nach Art eines Kfz-Rades ausgebildet ist. Der Reifen kann in diesem Fall an seiner Umfangsfläche mit Spike-artigen Mitnahmeelementen versehen sein. Der Luftdruck innerhalb des Reifens und somit der Druck, mit dem die Behältnisse komprimiert werden, läßt sich auf die jeweils anfallenden Behältnisse einstellen. Die Umfangsfläche des Reifens kann zusätzlich profiliert sein.

Nach einem weiteren vorteilhaften Merkmal der Erfindung kann der Abstand zwischen Rad und Blech einstellbar sein, wozu insbesondere die Achse des Rads am Gerätegehäuse verstellbar angeordnet sein kann. Hierdurch läßt sich auf einfachste Weise die Breite des zwischen Rad und Blech gebildeten Spalts an die jeweiligen Erfordernisse anpassen.

Weiterhin von Vorteil kann es sein, wenn die Radachse horizontal angeordnet ist und sich das gekrümmte Blech im wesentlichen unterhalb des Rades erstreckt; in diesem Fall fördert die Schwerkraft zusätzlich das ordnungsgemäße Einziehen der Behältnisse aus dem sich trichterartig erweiternden Anfangsabschnitt des keilförmigen Raums in den eigentlichen Kompressionsspalt.

In alternativer Ausgestaltung kann die Radachse beispielsweise auch vertikal angeordnet sein, wobei in diesem Fall das Rad antriebsmäßig mit einer rotierenden Scheibe verbunden sein könnte, auf der die zu komprimierenden Behältnisse im trichterförmigen Eingangsbereich stehen bzw. liegen und durch Rotation der Scheibe in Richtung des sich verengenden Spalts gefördert werden.

Weitere vorteilhafte Merkmale der Erfindung ergeben sich aus den übrigen Unteransprüchen sowie aus der nachfolgenden Beschreibung, in der zwei bevorzugte Ausführungsbeispiele der Erfindung anhand der Zeichnung näher erläutert sind. In der Zeichnung zeigen in halbschematischer Darstellung:
Fig. 1 eine Seiten-Schnittansicht eines ersten Ausführungsbeispiels einer erfindungsgemäßen Vorrichtung,
Fig. 2 eine weitere Schnittansicht der Vorrichtung gemäß Fig. 1 senkrecht zur Darstellung gemäß Fig. 1,
Fig. 3 eine teilweise geschnittene Draufsicht auf die Vorrichtung gemäß Fig. 1,
Fig. 4 eine Seiten-Schnittansicht eines zweiten Ausführungsbeispiels einer erfindungsgemäßen Vorrichtung,
Fig. 5 eine weitere Schnittansicht der Vorrichtung gemäß Fig. 4 senkrecht zur Darstellung gemäß Fig. 4, und
Fig. 6 eine teilweise geschnittene Draufsicht auf die Vorrichtung gemäß Fig. 4.

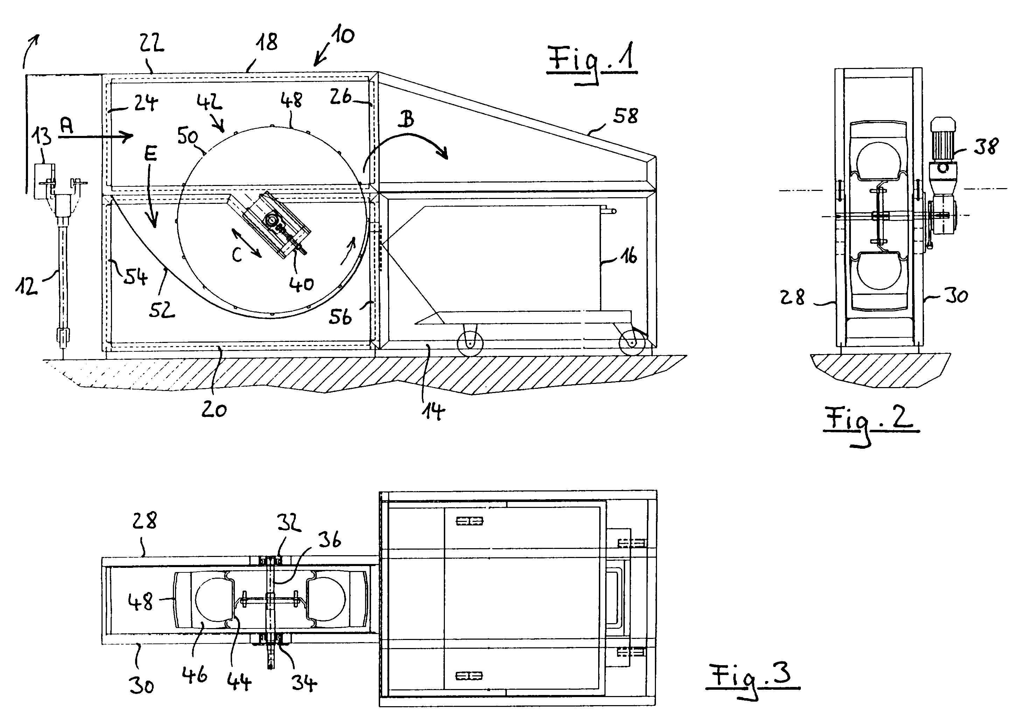

In Fig. 1 ist die eigentliche Kompressionsvorrichtung mit der Bezugsziffer 10 bezeichnet. Die zu zerkleinernden Behältnisse, insbesondere PET-Flaschen oder Blechdosen, werden von einem Transporteur 12 automatisch mittels eines Pushers 13 in Pfeilrichtung A der Kompressionsvorrichtung zugeführt und verlassen nach ihrer Komprimierung die Vorrichtung 10 in Pfeilrichtung B, wo sie beispielsweise in einen fahrbaren Karren 16 fallen, der insbesondere auch aus Sicherheits- und Lärmschutzgründen in einem Gehäuse 14 untergebracht ist, welches der Kompressionsvorrichtung 10 angegliedert ist.

Die Kompressionsvorrichtung 10 umfaßt ein im wesentlichen geschlossenes Gehäuse 18 mit einer unteren Gehäusehälfte 20 und einer oberen Gehäusehälfte 22. Die obere Gehäusehälfte 22 weist eine Eingangsöffnung 24 und eine Ausgangsöffnung 26 auf und ist im übrigen allseitig geschlossen. Die untere Gehäusehälfte 20 ist allseitig geschlossen. Die Seitenwände 28, 30 der unteren Gehäusehälfte tragen Lager 32, 34, in denen eine horizontal angeordnete Welle 36 drehbar gelagert ist. Ein an der unteren Gehäusehälfte 20 befestigter Motor 38 dient zum direkten Antrieb der Welle 36. Über eine Verstelleinrichtung 40 kann die Position der Welle in gewissen Grenzen in einer unter 45° zur Vertikalen liegenden Richtung verstellt werden, wie dies durch den Doppelpfeil C angedeutet ist.

Auf der Welle 36 ist ein insgesamt mit der Bezugsziffer 42 bezeichnetes Rad montiert, welches eine Felge 44 und einen aufblasbaren Reifen 46 umfaßt, insgesamt also nach Art eines Kfz-Reifen ausgebildet ist. An der Umfangsfläche 48 des Gummireifens 46 sind sich radial nach außen erstreckende metallische Mitnehmerelemente 50 in Form von Stiften ausgebildet, die, wie dies im Zusammenhang mit Spikes bekannt ist, in den Reifen einvulkanisiert sind.

In der unteren Gehäusehälfte ist weiterhin ein Blech 52 befestigt, das sich vom oberen Ende der eingangsseitigen Stirnwand 54 zum oberen Ende der ausgangsseitigen Stirnwand 56 der unteren Gehäusehälfte 20 erstreckt, dem Rad 42 gegenüberliegt und dessen Krümmungsradius in Drehrichtung D des Rades gesehen abnimmt, wobei der Krümmungsradius am eingangsseitigen Ende sehr viel größer ist als der Radius des Rades (das Blech kann hier auch ohne Krümmung, d.h. eben beginnen) und wobei sich der Krümmungsradius des Blechs 52 an seinem ausgangsseitigen Ende dem Radius des Rades 42 angenähert hat. Auf diese Weise wird zwischen dem Rad 42 und dem Blech 52 ein sich keilförmig verengender Raum gebildet, der im Eingangsbereich trichterförmig erweitert ist und im Ausgangsbereich die gewünschte Spaltbreite aufweist. Die Spaltbreite kann durch Verstellen der Welle 36 in Pfeilrichtung C mittels der weiter oben erwähnten Stelleinrichtung 40 auf das gewünschte Maß eingestellt werden. Die seitliche Begrenzung des sich keilförmig verengenden Raums wird von den Seitenwänden 28, 30 des Gehäuses gebildet.

Die zu komprimierenden Behältnisse werden somit durch die Eingangsöffnung 24 hindurch der Kompressionsvorrichtung 10 zugeführt, fallen aufgrund der Schwerkraft nach unten in Pfeilrichtung E in die trichterförmige Erweiterung, werden vom rotierenden Rad 42 mitgenommen und unter gleichzeitiger Kompression in den Spalt zwischen Rad 42 und Blech 52 eingezogen, wo die gefüllten Behältnisse platzen und entleert werden, und anschließend im komprimierten und gegebenenfalls entleerten Zustand in Pfeilrichtung B durch die Ausgangsöffnung 26 aus der Vorrichtung 10 ausgeworfen. Soweit gefüllte, geschlossene Behältnisse der Vorrichtung 10 zugeführt werden, werden diese gleichzeitig beim Zerquetschen entleert. Über einen nicht dargestellten Abfluß im Boden der unteren Gehäusehälfte 20 kann die Flüssigkeit abgeleitet werden.

Zum Warten der Vorrichtung 10 kann die obere Gehäusehälfte 22 von der unteren Gehäusehälfte 20 abgehoben werden, wobei das Abheben in an sich bekannter Weise durch nicht dargestellte Federeinrichtungen wie z. B. Gasdruckfedern unterstützt werden kann.

Die in Pfeilrichtung B aus dem Gerät 10 ausgeworfenen, komprimierten Behältnisse fallen in den im Gehäuse 14 angeordneten Karren 16. Die obere, schräg angeordnete Deckenwandung 58 des Gehäuses 40 kann hierbei gleichzeitig als Prallplatte zum Umlenken der ausgestoßenen Behältnisse nach unten in Richtung zum Karren 16 hin dienen.

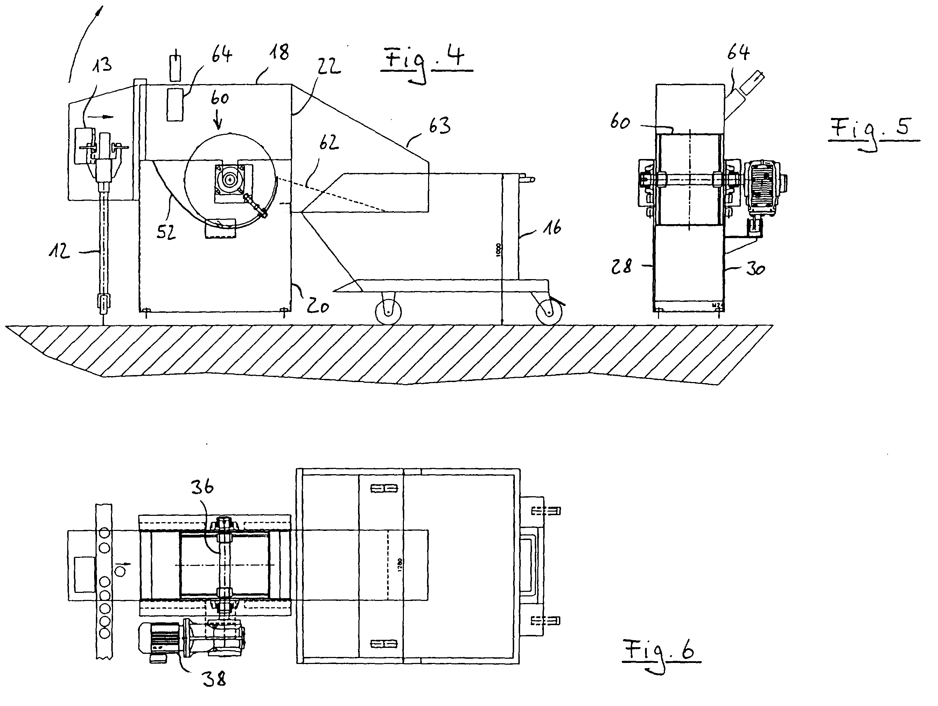

Bei einem weiteren Ausführungsbeispiel gemäß Figuren 4 bis 6 bezeichnen gleiche Bezugsziffern entsprechende Teile. Der grundsätzliche Aufbau ist im wesentlichen der gleiche, so daß auf eine Beschreibung insoweit verzichtet wird.

Das Rad ist hier als metallische Walze 60 ausgebildet und weist an seiner metallischen Oberfläche quer zur Umfangsrichtung verlaufende Leisten in Form von Flacheisen und zusätzliche Bolzen auf, um ein sicheres Einziehen der Behältnisse in den Spalt zu gewährleisten.

Das Blech endet im Falle dieses Ausführungsbeispiels in Höhe der Welle 36 und es schließt sich hieran eine abfallende Rutsche 62 an, über die die komprimierten und gegebenenfalls entleerten Behältnisse dem Karren 16 zugeführt werden. Der Bereich der Rutsche 62 ist von einer Schutzhaube 63 überdeckt.

Im oberen Bereich des Gehäuses 18 ist zusätzlich ein Einführschacht 64 vorgesehen, über den eine manuelle Zufuhr von einzelnen Behältnissen möglich ist. Diese manuelle Zufuhr ergänzt das automatische System Transporteur / Kompressionsvorrichtung / Karren.

Bei beiden Ausführungsbeispielen kann die Drehrichtung des Rades bzw. der Walze umkehrbar sein, um etwa auftretende Verklemmungen innerhalb des Kompressionsraumes zu beseitigen. Weiterhin können insbesondere im Falle des zweiten Ausführungsbeispiels geeignete Maßnahmen getroffen werden, um die Vorrichtung vor Überlast zu schützen, insbesondere, indem die Walze gegenüber dem Blech entgegen Federkraft ausweichen kann, wozu die Achse der Walze federnd gelagert sein kann.

### BEZUGSZEICHENLISTE

- 10: Kompressionsvorrichtung
- 12: Transporteur
- 13: Pusher
- 14: Gehäuse
- 16: Karren
- 18: Gehäuse
- 20: untere Gehäusehälfte
- 22: obere Gehäusehälfte
- 24: Eingangsöffnung
- 26: Ausgangsöffnung
- 28: Seitenwand
- 30: Seitenwand
- 32: Lager
- 34: Lager
- 36: Welle
- 38: Motor
- 40: Verstelleinrichtung
- 42: Rad
- 44: Felge
- 46: Reifen
- 48: Umfangsfläche
- 50: Mitnehmerelemente
- 52: Blech
- 54: Stirnwand
- 56: Stirnwand
- 58: Deckenwandung
- 60: Walze
- 62: Rutsche
- 63: Schutzhaube
- 64: Einführschacht

## Patentansprüche

1. Vorrichtung zum Komprimieren von Behältnissen wie insbesondere PET-Flaschen und Blechdosen,
enthaltend ein in einem Gerätegehäuse (18) drehbar und motorisch antreibbar gelagertes Rad (42, 60) und
ein einem Teilumfang des Rades gegenüberliegendes, gekrümmtes Blech (52),
dadurch gekennzeichnet, daß der Krümmungsradius des Blechs in Umlaufrichtung (D) des Rades von einem Anfangsabschnitt zu einem Endabschnitt abnimmt, wobei der Krümmungsradius im Anfangsabschnitt größer ist als der Krümmungsradius des Rades und der Krümmungsradius im Endabschnitt annähernd gleich wird dem Krümmungsradius des Rades derart, daß zwischen Rad (42, 60) und Blech (52) ein sich in Umlaufrichtung des Rades keilförmig verengender Raum gebildet wird,
wobei das Rad (42) an seiner Umfangsfläche (48) mit Mitnahmemitteln (50) zum Einziehen der zu komprimierenden Behältnisse in den sich keilförmig verengenden Raum und zum Transport der Behältnisse durch den sich keilförmig verengenden Raum versehen ist.

2. Vorrichtung nach Anspruch 1, dadurch gekennzeichnet, daß das Rad (42, 60) eine strukturierte Oberfläche aufweist.

3. Vorrichtung nach Anspruch 1 oder 2, dadurch gekennzeichnet, daß das Rad (42) eine Umfangsfläche (48) aus Gummi oder gummiähnlichem Material aufweist.

4. Vorrichtung nach Anspruch 3, dadurch gekennzeichnet, daß das Rad (42) eine Felge (44) und einen hierauf montierten, aufblasbaren Reifen (46) umfaßt.

5. Vorrichtung nach einem der vorhergehenden Ansprüche, dadurch gekennzeichnet, daß auf der Umfangsfläche (48) nach außen ragende Mitnehmerelemente (50) wie Stifte, Dornen, Bolzen, Leisten o.dgl. ausgebildet sind.

6. Vorrichtung nach einem der vorhergehenden Ansprüche, dadurch gekennzeichnet, daß der Abstand zwischen Rad (42) und Blech (52) einstellbar ist.

7. Vorrichtung nach Anspruch 6, dadurch gekennzeichnet, daß die Achse (36) des Rads (42) am Gerätegehäuse (18) verstellbar angeordnet ist.

8. Vorrichtung nach einem der vorhergehenden Ansprüche, dadurch gekennzeichnet, daß die Radachse (36) horizontal angeordnet ist, daß der Anfangsabschnitt des Blechs (52) oberhalb der Radachse (36) beginnt, und daß der Endabschnitt des Blechs (52) in etwa in Höhe der Radachse (36) endet.

9. Vorrichtung nach einem der Ansprüche 1 bis 7, dadurch gekennzeichnet, daß die Radachse (36) vertikal angeordnet ist.

10. Vorrichtung nach einem der vorhergehenden Ansprüche, dadurch gekennzeichnet, daß die Drehrichtung des Rades (42, 60) umkehrbar ist.

11. Vorrichtung nach einem der vorhergehenden Ansprüche, dadurch gekennzeichnet, daß zum Zwecke des Überlastschutzes der Abstand zwischen Rad (42, 60) und Blech (52) gegen Vorspannung vergrößerbar ist.

12. Vorrichtung nach Anspruch 11, dadurch gekennzeichnet, daß die Achse des Rades (42, 60) federnd gelagert ist.

13. Vorrichtung nach einem der vorhergehenden Ansprüche, dadurch gekennzeichnet, daß das Gerätegehäuse (18) eine erste Eingangsöffnung (24) zum automatischen Zuführen von Behältnissen insbesondere von einem Transporteur (12) sowie eine zweite Eingangsöffnung (64) zur manuellen Zufuhr aufweist.

14. Vorrichtung nach einem der vorhergehenden Ansprüche, dadurch gekennzeichnet, daß die Innenwände des Gerätegehäuses (18) die Seitenwände des sich keilförmig verengenden Raums bilden.

15. Vorrichtung nach einem der vorhergehenden Ansprüche, dadurch gekennzeichnet, daß der Motor (38) für das Rad (42, 60) dieses unmittelbar antreibt.

16. Vorrichtung nach einem der vorhergehenden Ansprüche, dadurch gekennzeichnet, daß der Motor (38) für das Rad (42, 60) an der Außenseite des Gerätegehäuses befestigt ist.

## Claims

1. Apparatus for compressing containers, such as in particular PET bottles and metal cans,
comprising a wheel (42, 60) mounted in a rotatable and motor-drivable manner in an appliance housing (18) and a curved plate (52), which lies opposite part of the circumference of the wheel,
characterized in that the radius of curvature of the plate decreases in direction of rotation (D) of the wheel from an initial portion to an end portion, wherein the radius of curvature in the initial portion is greater than the radius of curvature of the wheel and the radius of curvature in the end portion becomes approximately equal to the radius of curvature of the wheel such that a space narrowing in a wedge-shaped manner in the direction of rotation of the wheel is formed between wheel (42, 60) and plate (52),
wherein the wheel (42) at its circumferential surface (48) is provided with driving means (50) for drawing the containers to be compressed into the space narrowing in a wedge-shaped manner and for conveying the containers through the space narrowing in a wedge-shaped manner.

2. Apparatus according to claim 1, characterized in that the wheel (42, 60) has a textured surface.

3. Apparatus according to claim 1 or 2, characterized in that the wheel (42) has a circumferential surface (48) made of rubber or rubber-like material.

4. Apparatus according to claim 3, characterized in that the wheel (42) comprises a wheel rim (44) having an inflatable tyre (46) mounted thereon.

5. Apparatus according to one of the preceding claims, characterized in that formed on the circumferential surface (48) are outward projecting driver elements (50) such as pins, mandrels, bolts, strips or the like.

6. Apparatus according to one of the preceding claims, characterized in that the distance between wheel (42) and plate (52) is adjustable.

7. Apparatus according to claim 6, characterized in that the axle (36) of the wheel (42) is disposed adjustably on the appliance housing (18).

8. Apparatus according to one of the preceding claims, characterized in that the wheel axle (36) is disposed horizontally, that the initial portion of the plate (52) begins above the wheel axle (36), and that the end portion of the plate (52) terminates approximately at the level of the wheel axle (36).

9. Apparatus according to one of claims 1 to 7, characterized in that the wheel axle (36) is disposed vertically.

10. Apparatus according to one of the preceding claims, characterized in that the direction of rotation of the wheel (42, 60) is reversible.

11. Apparatus according to one of the preceding claims, characterized in that, for the purpose of overload protection, the distance between wheel (42, 60) and plate (52) may be increased counter to preloading.

12. Apparatus according to claim 11, characterized in that the axle of the wheel (42, 60) is spring mounted.

13. Apparatus according to one of the preceding claims, characterized in that the appliance housing (18) comprises a first inlet opening (24) for automatically feeding containers in particular from a conveyor (12) as well as a second inlet opening (64) for manual feeding.

14. Apparatus according to one of the preceding claims, characterized in that the inner walls of the appliance housing (18) form the side walls of the space narrowing in a wedge-shaped manner.

15. Apparatus according to one of the preceding claims, characterized in that the motor (38) for the wheel (42, 60) directly drives the latter.

16. Apparatus according to one of the preceding claims, characterized in that the motor (38) for the wheel (42, 60) is fastened to the outside of the appliance housing.

## Revendications

1. Dispositif pour écraser des récipients, tels qu'en particulier bouteilles PET et boîtes en fer-blanc, comportant une roue (42, 60) montée en rotation dans un carter (18) de l'appareil et entraînable par moteur, et une tôle (52) incurvée, en vis-à-vis d'un pourtour partiel de la roue, caractérisé en ce que le rayon de courbure de la tôle décroît d'une section initiale à une section finale dans le sens de rotation (D) de la roue, le rayon de courbure dans la section initiale étant plus élevé que le rayon de courbure de la roue, et le rayon de courbure dans la section finale étant à peu près égal au rayon de courbure de la roue, de sorte qu'un espace se rétrécissant en forme de coin dans le sens de rotation de la roue est formé entre la roue (42, 60) et la tôle (52), la roue (42) étant munie sur sa surface périphérique (48) de moyens d'entraînement (50) pour l'insertion des récipients à écraser dans l'espace se rétrécissant en forme de coin et pour le transport des récipients au travers de cet espace.

2. Dispositif suivant la revendication 1, caractérisé en ce que la roue (42, 60) présente une surface structurée.

3. Dispositif suivant l'une des revendications 1 et 2, caractérisé en ce que la roue (42) présente une surface périphérique (48) en caoutchouc ou en matériau analogue au caoutchouc.

4. Dispositif suivant la revendication 3, caractérisé en ce que la roue (42) comporte une jante (44) et un pneu gonflable (46) monté sur cette dernière.

5. Dispositif suivant l'une des revendications précédentes, caractérisé en ce que des moyens d'entraînement (50) dépassant vers l'extérieur, tels que goupilles, broches, axes, barres, ou autres, sont réalisés sur la surface périphérique (48).

6. Dispositif suivant l'une des revendications précédentes, caractérisé en ce que la distance entre la roue (42) et la tôle (52) est réglable.

7. Dispositif suivant la revendication 6, caractérisé en ce que l'essieu (36) de la roue (42) est disposé avec une possibilité de déplacement sur le carter (18) de l'appareil.

8. Dispositif suivant l'une des revendications précédentes, caractérisé en ce que l'essieu (36) est disposé horizontalement, en ce que la section initiale de la tôle (52) commence au-dessus de l'essieu (36), et en ce que la section finale de la tôle (52) s'achève à peu près au niveau de l'essieu (36) .

9. Dispositif suivant l'une des revendications 1 7, caractérisé en ce que l'essieu (36) est disposé verticalement.

10. Dispositif suivant l'une des revendications précédentes, caractérisé en ce que le sens de rotation de la roue (42, 60) est inversable.

11. Dispositif suivant l'une des revendications précédentes, caractérisé en ce que la distance entre la roue (42, 60) et la tôle (52) peut être augmentée contre une précontrainte, à des fins de protection contre les surcharges.

12. Dispositif suivant la revendication 11, caractérisé en ce que l'axe de la roue (42, 60) a un montage élastique.

13. Dispositif suivant l'une des revendications précédentes, caractérisé en ce que le carter (18) de l'appareil présente une première ouverture d'entrée (24) pour l'arrivée automatique de récipients, en particulier par un transporteur (12), ainsi qu'une seconde ouverture d'entrée (64) pour l'alimentation manuelle.

14. Dispositif suivant l'une des revendications précédentes, caractérisé en ce que les parois internes du carter (18) de l'appareil forment les parois latérales de l'espace se rétrécissant en forme de coin.

15. Dispositif suivant l'une des revendications précédentes, caractérisé en ce que le moteur (38) pour la roue (42, 60) entraîne directement cette dernière.

16. Dispositif suivant l'une des revendications précédentes, caractérisé en ce que le moteur (38) pour la roue (42, 60) est fixé sur le côté externe du carter de l'appareil.
